# EUROPEAN PATENT APPLICATION

(11) **EP 4 835 704 A1**
(43) Date of publication of application: **04.11.2026**
(21) Application number: 24913830.6
(22) Date of filing: 27.12.2024
(51) Int. Cl.: G06F 21/57, G06F 21/55, G06Q 10/06, G06Q 30/02, G06F 3/0482

(54) **SECURITY CONTROL AND COST CONTROL OPTIMIZATION SYSTEM AND METHOD**

(30) Priority: 29.12.2023 KR 20230195902
(71) Applicant: Hanwha Ocean Co., Ltd., Geoje-si, Gyeongsangnam-do 53302 (KR); Cytur Inc., Seoul 08511 (KR)
(72) Inventor: YANG, Woo Yung, Seoul 01785 (KR); YU, Ji Hun, Seongnam-si, Gyeonggi-do 13643 (KR); JO, Yong Hyun, Seoul 08511 (KR)
(74) Representative: Cabinet Beau de Loménie
(86) International application number: PCT/KR2024/097196
(87) International publication number: WO 2025/144026

(57) **Abstract**

The present invention relates to a system for optimizing control costs for effective security control when constituting a ship cybersecurity architecture, particularly a method and system for simulation of security and costs that can calculate control costs based on control policies included in selected security controls, can determine acceptable control risks based on the control costs, and can automatically propose optimal security costs, thereby enabling improvement in security standards for newly established companies, organizations, and ships.

## Description

### [Technical Field]

The present invention relates to a system for optimizing control costs for effective security control when constituting a ship cybersecurity architecture, particularly a method and system for simulation of security and costs that can calculate control costs based on control policies included in selected security controls, can determine acceptable control risks based on the control costs, and can automatically propose optimal security costs, thereby enabling improvement in security standards for newly established companies, organizations, and ships.

### [Background Art]

Recently, as cybersecurity threats have become more diverse and sophisticated, various security technologies and products designed to address such threats have been released. A measure for addressing such threats requires calculation of an appropriate level of security cost through security control.

Generally, conditions influencing calculation of security costs are set based on requirements, compliance, analysis results of an environment, and mitigation measures.

For example, to comply with the "Protect" requirements of IACS UR E26, such conditions consist of data on the manufacturer, model, network speed/bandwidth, the number of system cores, application types, and network configuration of a CBS (computer-based system) that is ultimately selected and installed based on ship-owner requirements, applicable regulations, and analysis results of an environment.

Accordingly, mitigation measures are implemented through firewalls, intrusion detection systems, logging, and the like.

However, although security control requires both technical measures, such as systems, networks, applications, mobile devices, and source codes, and the like, and policy measures, such as security organizations, policies, users, administrators, and the like, the cost of the security control increases as the control becomes more stringent.

Therefore, the security control to be implemented based on security requirements and the cost associated with implementation of the security control must be selected at an appropriate level.

However, currently, there is no method to calculate and simulate the specific costs required to determine an optimal level of security control, leading to problems such as excessive expenditure from over-specification or control circumvention due to under-spending.

The related art is disclosed in Korean Patent Laid-open Publication No. 10-2020-0029266 (published on March 18, 2020).

### [Disclosure]

### [Technical Problem]

It is one aspect of the present invention to provide a system and method for optimizing security control and cost control through simulation of security and costs, which can achieve improvement in security standards for newly established companies, organizations, and ships by calculating control costs based on control policies included in selected security controls, determining acceptable control risks based on the control costs, and automatically proposing optimal security costs when configuring a ship cybersecurity architecture.

It is another aspect of the present invention to provide a system and method for optimizing security control and cost control through simulation of security and costs, which can standardize components for security controls, calculate security control costs based on the standardized data, and simulate various mitigation measures.

### [Technical Solution]

In accordance with one aspect of the present invention, a method for optimizing security control and cost control includes: a server connection step in which a user terminal device connects to a server, the server being linked to a cybersecurity database and having security control and cost control programs installed therein while communicating with a plurality of user terminal devices via the Internet; an input window provision step in which the server provides cybersecurity requirements, a menu list, and an input window in which cybersecurity conditions for a selected menu item are input; a data input step in which basic ship data and CBS condition data are inputted into the input window provided by the server in the input window provision step using the user terminal device; a control risk extraction step in which the server, based on the data input in the data input step, calculates control costs in accordance with control policies extracted by analysis of ship cybersecurity requirements by interfacing with the cybersecurity database via the security control and cost control programs, and extracts acceptable control risks based on the control costs; and a result presentation step in which the server presents a result extracted in the control risk extraction step to the user terminal device.

In the data input step, the CBS condition data may include at least one of ship CBS, networks, documents, and on-board test data.

The control risk extraction step may include analyzing the ship cybersecurity requirements, calculating costs for application of security control methods and control technologies and policies depending thereon, and simulating data corresponding to input values to extract acceptable control risks according to the control costs.

In the result presentation step, the data extracted by interfacing with the cybersecurity database may be presented to the user terminal device in the form of a radar chart representing characteristics of multiple security control items; and items requiring security controls and an effective security control level may be verified by checking a filled state of a baseline radar chart for each security control item.

In accordance with another aspect of the present invention, a system for optimizing security control and cost control includes: a user terminal device configured to communicate with a server, which is linked to a cybersecurity database and has security control and cost control programs installed therein, to input cybersecurity requirements including security requirements and regulatory requirements; the server being configured to allow access through the user terminal device and providing cybersecurity requirements, a menu list, and an input window in which cybersecurity conditions for a selected menu item are input; and the cybersecurity database being linked to the server and storing cybersecurity data required for ships, including security requirements and regulatory requirements, wherein the server analyzes security controls via the security control and cost control programs by interfacing with the cybersecurity database, based on input data including basic ship data and CBS condition data input through the user terminal device, calculates control costs in accordance with control policies, extracts acceptable control risks based on the control costs, and presents an extracted result to the user terminal device.

The user terminal device may be configured for input of data, including basic ship data and CBS condition data through the input window provided by the server; and the CBS condition data may include at least one of ship CBS, networks, documents, and on-board test data.

The server may analyze the ship cybersecurity requirements, calculate costs for application of security control methods and control technologies and policies depending thereon, and simulate data corresponding to input values to extract acceptable control risks according to the control costs.

The server may present the data extracted by interfacing with the cybersecurity database to the user terminal device in the form of a radar chart representing characteristics of multiple security control items; and items requiring security controls and an effective security control level may be verified by checking a filled state of a baseline radar chart for each security control item.

### [Advantageous Effects]

Embodiments of the present invention provide a system and method for optimizing security control and cost control through simulation of security and costs, which can achieve improvement in security standards for newly established companies, organizations, and ships by calculating control costs based on control policies included in selected security controls, determining acceptable control risks based on the control costs, and automatically proposing optimal security costs when configuring a ship cybersecurity architecture.

In addition, embodiments of the present invention provide a system and method for optimizing security control and cost control through simulation of security and costs, which can standardize components for security controls, calculate security control costs based on the standardized data, and simulate various mitigation measures.

### [Description of Drawings]

FIG. 1 is a diagram illustrating the configuration of a system for optimizing security control and cost control according to the present invention.
FIG. 2 is a flowchart illustrating a method for optimizing security control and cost control according to the present invention.
FIG. 3 is a diagram illustrating a process of calculating control costs in the control risk extraction step in the method for optimizing security control and cost control according to the present invention.
FIG. 4 is a diagram illustrating the data input step and the control risk extraction step in the method for optimizing security control and cost control according to the present invention.
FIG. 5 is a diagram illustrating the configuration of a ship cybersecurity database in the system for optimizing security control and cost control according to the present invention.
FIG. 6 is a diagram illustrating the input window provision step in the method for optimizing security control and cost control according to the present invention.
FIG. 7 is a diagram illustrating data input in the data input step in the method for optimizing security control and cost control according to the present invention.
FIG. 8 is a diagram illustrating the result presentation step in the method for optimizing security control and cost control according to the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

The present invention relates to a system for optimizing control costs for effective security controls when configuring a ship cybersecurity architecture. Specifically, the present invention relates to a method and system for simulation of security and costs that can calculate control costs based on control policies included in selected security controls, can determine acceptable control risks based on the control costs, and can automatically propose optimal security costs, thereby enabling improvement in security standards for newly established companies, organizations, and ships.

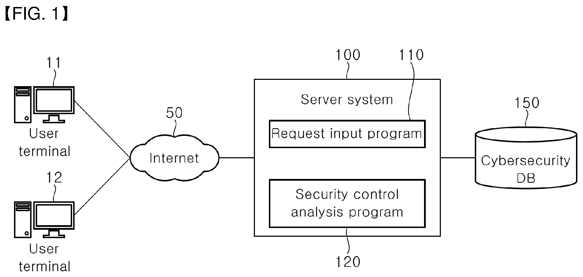

Referring to FIG. 1, a system for optimizing security control and cost control according to the present invention includes a user terminal device 10 configured to communicate with a server 100, which is linked to a cybersecurity database 150 and having security control and cost control programs installed therein, to input cybersecurity requirements including security requirements and regulatory requirements; the server 100 being configured to allow access through the user terminal device 10 and providing cybersecurity requirements, a menu list, and an input window in which cybersecurity conditions for a selected menu item are input; and the cybersecurity database DB 150 being linked to the server 100 and storing cybersecurity data required for ships, including security requirements and regulatory requirements.

The server 100 may analyze security controls via the security control and cost control programs by interfacing with the cybersecurity database 150, based on input data including basic ship data and ship (CBS: Computer-Based System) condition data input through the user terminal device 10, may calculate control costs in accordance with control policies, and may extract acceptable control risks based on the control costs.

In addition, the server 100 may present the extracted results to the user terminal device. Specifically, the server 100 may present the data extracted by interfacing with the cybersecurity database 150 to the user terminal device 10 in the form of a radar chart representing characteristics of multiple security control items, and may determine items requiring security controls and an effective security control level by checking a fill state of a baseline radar chart for each security control item.

The user terminal device 10 may include a plurality of user terminal devices 11, 12 that can connect to the server via the Internet to communicate therewith.

In addition, the user terminal device 10 may be configured for input of data, including basic ship data and CBS condition data through the input window 110 provided by the server 100, and the CBS condition data may include at least one of ship CBS, networks, documents, and on-board test data.

Furthermore, the server 100 may analyze the ship cybersecurity requirements, calculate costs for application of security control methods and control technologies and policies depending thereon, and simulate data corresponding to input values to extract acceptable control risks according to the control costs.

In other words, in the system for optimizing security control and cost control, the server 100 linked to the cybersecurity database (DB) storing data for ships including security requirements and regulatory requirements and having the security control and cost control programs installed therein may communicate with multiple terminal devices 11, 12 via the Internet to present security control methods extracted by analysis of the ship cybersecurity requirements, the associated control technologies and policies, and to calculate costs for application of the security control methods and the associated control technologies and policies.

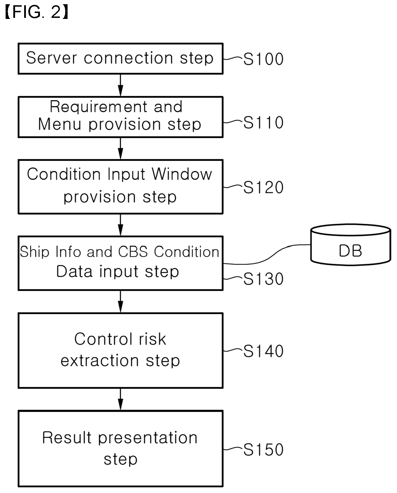

Referring to FIG. 2, a method for optimizing security control and cost control according to another aspect of the present invention includes: a server connection step S100 in which a plurality of user terminal devices connect to a server via the Internet, the server being linked to a cybersecurity database and equipped with security control and cost control programs, to communicate therewith; a requirement and menu provision step S110 in which the server provides cybersecurity requirements and menus; an input window provision step S120 in which the server provides an input window for entering cybersecurity conditions for a selected menu item; a data input step S130 in which basic ship data and CBS condition data are inputted into the input window provided by the server in the input window provision step S120 through the user terminal device; a control risk extraction step S140 in which the server, based on the data input in the data input step S130, calculates control costs in accordance with control policies extracted by analysis of ship cybersecurity requirements by interfacing with the cybersecurity database via security control and cost control programs, and extracts acceptable control risks based on the control costs; and a result presentation step S150 in which the server presents a result extracted in the control risk extraction step S140 to the user terminal device.

That is, when the user terminal device 10 connects to the server 100, the server 100 provides a menu list of cybersecurity requirements to the user terminal device 10, and when a menu item is selected on the user terminal device 10, the server 100 can display a corresponding input window for cybersecurity conditions.

Next, when the basic information and the CBS requirements for ships are input into the input window through the user terminal device 10, the server 100 may extract data from the ship cybersecurity database 150 based on the input conditions through operation of the security control and cost control programs to provide information corresponding to the input values to the user terminal device.

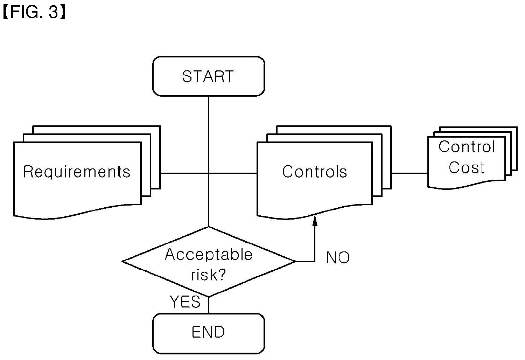

Furthermore, referring to FIG. 3, in the process of calculating the control costs in the control risk extraction step, the cybersecurity requirements are analyzed to determine whether a risk is acceptable. Then, upon determining that the risk is acceptable, the process is terminated, and upon determining that the risk is not acceptable, security controls may be applied and costs for application of the security controls may be calculated.

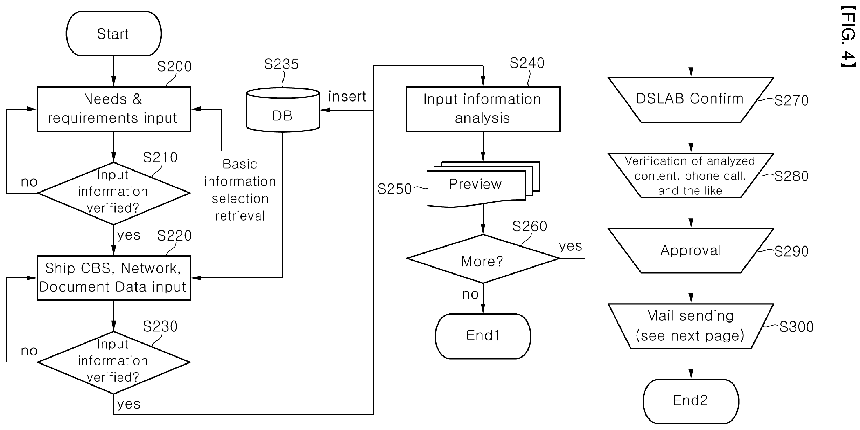

FIG. 4 is a diagram illustrating the data input step and the control risk extraction step in the method for optimizing security control and cost control according to the present invention. In the data input step S120, requirements necessary for cybersecurity are input and the input data may be verified.

In addition, basic ship data and CBS condition data including ship CBS, networks, documents, and on-board test data may be input and the input data may be verified.

Next, the server 100 may analyze the input data, may calculate control costs in accordance with the control policies by interfacing with the cybersecurity database, may extract acceptable control risks based on the control costs, and may present extracted results to the user terminal device.

The results may be presented via message or email and may be presented in the form of a radar chart representing characteristics of multiple security control items. By checking a fill state of a baseline radar chart for each security control item, it is possible to easily determine items requiring security controls and an effective security control level at a glance.

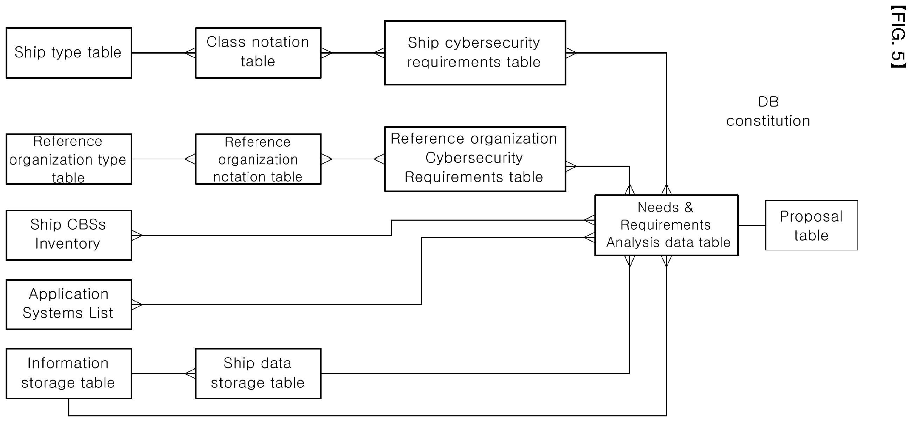

FIG. 5 is a diagram illustrating the configuration of a ship cybersecurity database in the system for optimizing security control and cost control according to the present invention, in which class type tables, class notation tables, reference organization notation tables, and cybersecurity requirements table may be stored and linked together.

In addition, ship CBS inventory, a list of application systems, and a data storage table may be stored and linked together.

Accordingly, the cybersecurity database may be linked to the server to allow analysis of the cybersecurity requirements including the corresponding data.

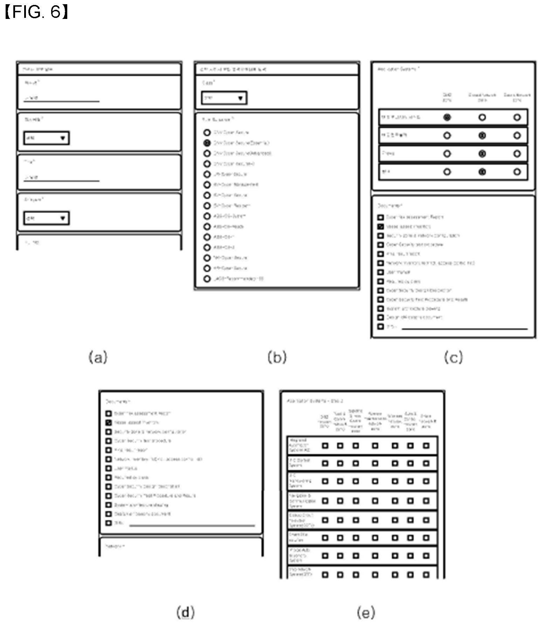

FIG. 6 is a diagram illustrating the input window provision step in the method for optimizing security control and cost control according to the present invention. FIG. 6(a) shows an input window for inputting client information, FIG. 6(b) shows an input window for inputting details of a request for a ship cybersecurity quote, and FIG. 6(c) to FIG. 6(e) show input windows in which applicable systems and documents are input.

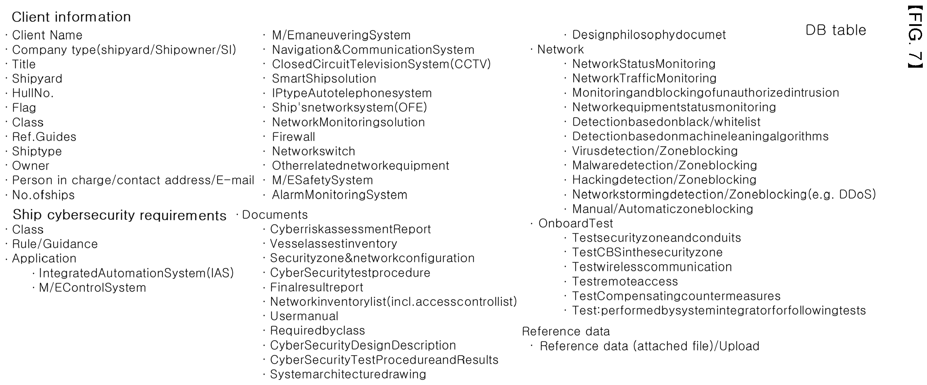

FIG. 7 is a diagram illustrating data input in the data input step in the method for optimizing security control and cost control according to the present invention, in which basic ship data and client data are provided, and details of ship cybersecurity requirements, documents, networks, and on-board test data can be input.

That is, in the data input step S130, the CBS condition data may include at least one of ship CBS, networks, documents, and on-board test data.

Furthermore, the control risk extraction step S140) may include analyzing the ship cybersecurity requirements, calculating costs for application of security control methods and control technologies and policies depending thereon, and performing simulation using the input values to generate data for extraction of acceptable control risks based on the control costs.

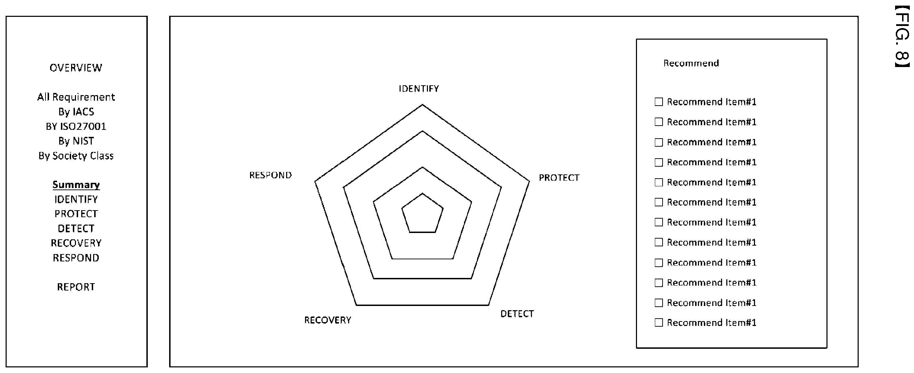

FIG. 8 is a diagram illustrating the result presentation step in the method for optimizing security control and cost control according to the present invention.

In other words, the extracted results may be presented in the form of a radar chart representing characteristics of multiple security control items, and in FIG. 8, by checking a filled state where a baseline radar chart of each security control item are filled from the center outwards across five characteristics (IDENTIFY, PROTECT, DETECT, RECOVERY, and RESPOND), it is possible to easily check both items requiring security controls and security control levels thereof at a glance.

Furthermore, in the result presentation step S150), recommended cybersecurity measures may be presented based on various scenarios.

In connection with the aforementioned characteristics of IDENTIFY, PROTECT, DETECT, RECOVERY, and RESPOND, recommended products for each item may be suggested and presented depending on which specific characteristic is intensively controlled by adjusting the security control levels.

As such, according to the present invention, the system and method for optimizing security control and cost control can achieve improvement in security standards for newly established companies, organizations, and ships by calculating control costs based on control policies included in selected security controls, determining acceptable control risks based on the control costs, and automatically proposing optimal security costs when configuring a ship cybersecurity architecture.

Furthermore, according to the present invention, the system and method for optimizing security control and cost control can standardize components for security controls, calculate security control costs based on the standardized data, and simulate various mitigation measures.

The embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROM; RAM; and flash memory. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the invention.

### [List of Reference numerals]

10: User terminal device
50: Internet
100: Server
110: Request input program
120: Security control analysis program
150: Cybersecurity database

## Claims

1. A method for optimizing security control and cost control, comprising:
a server connection step in which a user terminal device connects to a server, the server being linked to a cybersecurity database and having security control and cost control programs installed therein while communicating with a plurality of user terminal devices via the Internet;
an input window provision step in which the server provides cybersecurity requirements, a menu list, and an input window in which cybersecurity conditions for a selected menu item are input;
a data input step in which basic ship data and CBS condition data are inputted into the input window provided by the server in the input window provision step using the user terminal device;
a control risk extraction step in which the server, based on the data input in the data input step, calculates control costs in accordance with control policies through an analysis of ship cybersecurity requirements by interfacing with the cybersecurity database via the security control and cost control programs, and extracts acceptable control risks based on the control costs; and
a result presentation step in which the server presents a result extracted in the control risk extraction step to the user terminal device.

2. The method according to claim 1, wherein, in the data input step, the CBS condition data comprises at least one of ship CBS, networks, documents, and on-board test data.

3. The method according to claim 1, wherein the control risk extraction step comprises analyzing the ship cybersecurity requirements, calculating costs for application of security control methods and control technologies and policies dependent thereon, and simulating data corresponding to input values to extract acceptable control risks according to the control costs.

4. The method according to claim 1, wherein, in the result presentation step, the data extracted by interfacing with the cybersecurity database is presented to the user terminal device in the form of a radar chart representing characteristics of multiple security control items; and items requiring security controls and an effective security control level are verified by checking a filled state of a baseline radar chart for each security control item.

5. A system for optimizing security control and cost control, comprising:
a user terminal device configured to communicate with a server linked to a cybersecurity database and having security control and cost control programs installed therein to input cybersecurity requirements including security requirements and regulatory requirements;
the server being configured to allow access through the user terminal device and providing cybersecurity requirements, a menu list, and an input window in which cybersecurity conditions for a selected menu item are input; and
the cybersecurity database being linked to the server and storing cybersecurity data required for ships, including security requirements and regulatory requirements,
wherein the server analyzes security controls via the security control and cost control programs by interfacing with the cybersecurity database, based on input data including basic ship data and CBS condition data input through the user terminal device, calculates control costs in accordance with control policies, extracts acceptable control risks based on the control costs, and presents an extracted result to the user terminal device.

6. The system according to claim 5, wherein the user terminal device is configured for input of data, including basic ship data and CBS condition data through the input window provided by the server; and
the CBS condition data comprises at least one of ship CBS, networks, documents, and on-board test data.

7. The system according to claim 5, wherein the server analyzes the ship cybersecurity requirements, calculates costs for application of security control methods and control technologies and policies depending thereon, and simulates data corresponding to input values to extract acceptable control risks according to the control costs.

8. The system according to claim 5, wherein the server presents the data extracted by interfacing with the cybersecurity database to the user terminal device in the form of a radar chart representing characteristics of multiple security control items; and items requiring security controls and an effective security control level are verified by checking a filled state of a baseline radar chart for each security control item.
